# EUROPEAN PATENT APPLICATION

(11) **EP 4 847 324 A1**
(43) Date of publication of application: **02.12.2026**
(21) Application number: 24926446.6
(22) Date of filing: 29.02.2024
(51) Int. Cl.: B60R 16/037

(54) **COCKPIT CONTROL METHOD, ELECTRONIC SYSTEM, AND VEHICLE**

(71) Applicant: Yinwang Intelligent Technologies Co., Ltd., Shenzhen, Guangdong 518110 (CN)
(72) Inventor: ZHU, Liangming, Shenzhen, Guangdong 518129 (CN); XIANG, Teng, Shenzhen, Guangdong 518129 (CN)
(74) Representative: Pfenning, Meinig & Partner mbB
(86) International application number: PCT/CN2024/079479
(87) International publication number: WO 2025/179567

(57) **Abstract**

A cockpit control method, an electronic system, and a vehicle are provided, and relate to the field of electronic control technologies, so that a user can experience a media resource more vividly in a cockpit in dimensions such as vision and audition, and a plurality of user experience requirements are met. According to the method, a vehicle may obtain posture information corresponding to different postures of a user, and render an image and audio in the media resource based on the currently obtained posture information. When a posture of the user changes, both rendering on the image and rendering on the audio change, and a display effect of the image and the audio also change. A head-mounted device connected to the vehicle can present, to the user, a dynamic image 3D visual effect that changes with the posture of the user. A plurality of speakers in the cockpit can present, to the user, a dynamic and immersive auditory effect that changes with the posture of the user. The user can experience the media resource in the cockpit in both visual and auditory ways, so that the user has better experience and a plurality of user experience requirements.

## Description

### TECHNICAL FIELD

This application relates to the field of electronic control technologies, and in particular, to a cockpit control method, an electronic system, and a vehicle.

### BACKGROUND

In recent years, with rapid development of intelligent vehicles, users have increasingly high requirements for functions provided by the intelligent vehicles. For example, the users hope that the intelligent vehicles can have excellent driving performance, and also hope that the intelligent vehicles can bring better entertainment experience.

Currently, audio and video systems, display systems, autonomous driving systems, or the like of some intelligent vehicles may be connected to head-mounted devices such as a virtual reality (virtual reality, VR) device and an augmented reality (augmented reality, AR) device, to provide users with high-definition large-screen visual experience in cockpits of the vehicles, or provide users with multi-dimensional driving virtual scene pictures in autonomous driving scenarios, so as to provide immersive user experience.

However, the foregoing provided film watching experience, virtual scenario experience, or the like has limited or simple functions, and cannot meet a plurality of user experience requirements.

### SUMMARY

Embodiments of this application provide a cockpit control method, an electronic system, and a vehicle, so that a user can experience a media resource more vividly in a cockpit in dimensions such as vision and audition, and a plurality of user experience requirements are met.

To achieve the foregoing objectives, the following technical solutions are used in embodiments of this application.

According to a first aspect, a cockpit control method is provided, applied to a vehicle, where the vehicle includes at least two speakers that are respectively disposed at different locations in a cockpit, and the vehicle is connected to a head-mounted device. In the method, the vehicle obtains a media resource and first pose information of a user in the cockpit, where the media resource includes an image and audio corresponding to the image. Then, the vehicle sends, to the head-mounted device based on the first pose information, an image including a first display effect, where the first display effect is a three-dimensional effect obtained based on the first pose information. The vehicle controls, based on the first pose information, each speaker to play audio corresponding to the speaker, where the audio corresponding to each speaker is obtained based on the audio in the media resource, attribute information of the speaker, and the first pose information. The vehicle continues to obtain second pose information of the user in the cockpit, and sends, to the head-mounted device based on the second pose information, an image including a second display effect, where the second display effect is a three-dimensional effect obtained based on the second pose information. Then the vehicle controls, based on the second pose information, each speaker to play audio corresponding to the speaker, where the audio corresponding to each speaker is obtained based on the audio in the media resource, the attribute information of the speaker, and the second pose information.

In the foregoing method, the first pose information and the second pose information may indicate information corresponding to different poses of the user in the cockpit respectively. The vehicle may send, to the head-mounted device, an image that corresponds to or matches a current posture of the user, and control the speaker to play audio that corresponds to or matches the current posture of the user, so that the head-mounted device can present a dynamic three-dimensional visual effect that varies with the posture of the user. The plurality of speakers in the cockpit can present, to the user, a dynamic and immersive auditory effect that changes with the posture of the user. The user can experience the media resource in the cockpit in both visual and auditory ways, so that the user has better experience and a plurality of user experience requirements are met.

In an implementation of the first aspect, when obtaining the media resource, the vehicle may obtain the media resource from storage space of the vehicle, or obtain the media resource from a server. The media resource includes a two-dimensional media resource, a three-dimensional media resource, a panoramic media resource, a VR media resource, or an AR media resource. Therefore, the vehicle may provide different media resources for the user to experience.

In an implementation of the first aspect, when obtaining the first pose information of the user in the cockpit, the vehicle may obtain first information sent by the head-mounted device, where the first information is obtained by the head-mounted device through at least one sensor, and the first information includes head posture information of the user. In addition, the vehicle obtains second information through at least one sensor in the cockpit, where the second information includes one or more of image information of the user, infrared information, seat location information of a seat in which the user is located, seat back angle information, seat angle information, or seat pressure information. Then, the vehicle determines the first pose information based on the first information and the second information.

In the foregoing implementation, the vehicle may obtain, through a plurality of information input channels, information collected by a plurality of sensors, and more accurately determine user pose information with reference to the information of the plurality of sensors.

In an implementation of the first aspect, the second display effect is an effect obtained after the first display effect changes, and a change of a display effect includes a change of one or more of an image angle of view, image content, or an image size. Therefore, the head-mounted device presents, to the user, more abundant image display effects that change with the posture of the user.

In an implementation of the first aspect, the audio corresponding to each speaker changes based on a change of user pose information, and a change of audio includes a change of one or more of an audio frequency, an audio amplitude, an audio delay, an audio phase, or an audio spectrum feature. In this way, the plurality of speakers in the cockpit present, to the user, more abundant sound playing effects that change with the posture of the user.

In an implementation of the first aspect, the vehicle obtains image information of the image in the media resource, where the image information includes one or more of season information, weather information, temperature information, site information, scene information, or event information. In addition, the vehicle controls a function component in the cockpit to provide a function that matches the image information, where the function component includes one or more of a seat, an in-vehicle air conditioner, an in-vehicle air humidifier, an in-vehicle air freshener, or a vibration unit on a seat. In this way, the vehicle may further enable, with reference to the image information, the user to experience a feeling in a dimension like a sense of motion and a sense of smell that correspond to content presented in the image, so as to provide a richer sense of experience for the user.

In an implementation of the first aspect, the function component includes the vibration unit on the seat, there are one or more vibration units, and each vibration unit is disposed at a different location on the seat. When controlling the function component in the cockpit to provide the function that matches the image information, the vehicle may determine, based on the image information, vibration information corresponding to the vibration unit, where the vibration information includes a vibration frequency and/or vibration intensity. Then, the vehicle controls, based on the vibration information, the vibration unit to vibrate. In this way, the user can experience vibration corresponding to the content presented by the image.

In an implementation of the first aspect, the function component includes one or more of the in-vehicle air conditioner, the in-vehicle air humidifier, or the in-vehicle air freshener. When controlling the function component in the cockpit to provide the function that matches the image information, the vehicle may determine setting information of the function component based on the image information, where the setting information includes one or more of a specified temperature value corresponding to the in-vehicle air conditioner, a specified humidity value corresponding to the in-vehicle air humidifier, or smell information corresponding to the in-vehicle air freshener, and the smell information includes a target fragrance and/or a smell concentration. The vehicle adjusts one or more of a temperature of the in-vehicle air conditioner, a humidity of the in-vehicle air humidifier, or a smell of the in-vehicle air freshener based on the setting information. In this way, the user may experience a seat pose, a temperature and humidity, a smell, and the like that correspond to the content presented by the image.

In an implementation of the first aspect, when determining, based on the first pose information, to send the image including the first display effect to the head-mounted device, the vehicle may determine a first display parameter of the image based on the first pose information, where the first display parameter represents the first display effect of the image. Then, the vehicle performs rendering processing on the image based on the first display parameter, and sends, to the head-mounted device, the image on which the rendering processing is performed.

In the foregoing implementation, the vehicle may determine, based on the posture information of the user, the display parameter of the image that matches the current posture of the user, and render the image based on the display parameter, so that the head-mounted device can display the image that matches the current posture of the user, and better visual experience is brought to the user.

In an implementation of the first aspect, when controlling, based on the first pose information, each speaker to play audio corresponding to the speaker, the vehicle may obtain the attribute information of each speaker, where the attribute information includes one or more of a location of the speaker in the cockpit, a sound emitting direction, or a frequency response. The vehicle determines, based on the audio in the media resource, the first pose information, and the attribute information of the speaker, a first playing parameter of the audio corresponding to the speaker. The vehicle performs, based on the first playing parameter, rendering processing on the audio corresponding to the speaker, and sends, to the speaker, the audio on which the rendering processing is performed, so that the speaker plays the audio on which the rendering processing is performed.

In the foregoing implementation, the vehicle may determine, based on the posture information of the user and the attribute information of the speaker, the playing parameter of the audio that matches the current posture of the user, and render the audio based on the playing parameter, so that each speaker can play a sound that matches the current posture of the user, and better auditory experience is brought to the user.

According to a second aspect, a cockpit control method is provided, applied to a vehicle, where the vehicle includes at least one function component, and the vehicle is connected to a head-mounted device. In the method, the vehicle obtains a media resource and first pose information of a user in a cockpit, where the media resource includes an image. The vehicle sends, to the head-mounted device based on the first pose information, an image including a first display effect, where the first display effect is a three-dimensional effect obtained based on the first pose information. The vehicle continues to obtain second pose information of the user in the cockpit, and sends, to the head-mounted device based on the second pose information, an image including a second display effect, where the second display effect is a three-dimensional effect obtained based on the second pose information. In addition, the vehicle controls, based on image information of the image, the function component in the cockpit to provide a function that matches the image information.

In the foregoing method, the first pose information and the second pose information may indicate information corresponding to different poses of the user in the cockpit respectively. The vehicle may send, to the head-mounted device, an image that corresponds to or matches a current posture of the user, and the vehicle may further control, based on image information, a function component in the cockpit to provide a function that matches the image information. In addition, the head-mounted device can present a dynamic three-dimensional visual effect that changes with the posture of the user, and the vehicle can further provide experience in another dimension for the user. The user can experience the media resource in the cockpit from a plurality of aspects, so that the user has better experience and a plurality of user experience requirements are met.

In an implementation of the second aspect, when obtaining the first pose information of the user in the cockpit, the vehicle may obtain first information sent by the head-mounted device, where the first information is obtained by the head-mounted device through at least one sensor, and the first information includes head posture information of the user. The vehicle obtains second information through at least one sensor in the cockpit, where the second information includes one or more of image information of the user, infrared information, seat location information of a seat in which the user is located, seat back angle information, seat angle information, or seat pressure information. The vehicle determines the first pose information based on the first information and the second information.

In the foregoing implementation, the vehicle may obtain, through a plurality of information input channels, information collected by a plurality of sensors, and more accurately determine user pose information with reference to the information of the plurality of sensors.

In an implementation of the second aspect, the second display effect is an effect obtained after the first display effect changes, and a change of a display effect includes a change of one or more of an image angle of view, image content, or an image size. Therefore, the head-mounted device presents, to the user, more abundant image display effects that change with the posture of the user.

In an implementation of the second aspect, the function component includes a vibration unit on a seat, there are one or more vibration units, and each vibration unit is disposed at a different location on the seat. When controlling the function component in the cockpit to provide the function that matches the image information, the vehicle may determine, based on the image information, vibration information corresponding to the vibration unit, where the vibration information includes a vibration frequency and/or vibration intensity. Then, the vehicle controls, based on the vibration information, the vibration unit to vibrate. In this way, the user can experience vibration corresponding to the content presented by the image.

In an implementation of the second aspect, the function component includes one or more of a seat, an in-vehicle air conditioner, an in-vehicle air humidifier, or an in-vehicle air freshener. When controlling the function component in the cockpit to provide the function that matches the image information, the vehicle may determine setting information of the function component based on the image information, where the setting information includes one or more of a specified temperature value corresponding to the in-vehicle air conditioner, a specified humidity value corresponding to the in-vehicle air humidifier, or smell information corresponding to the in-vehicle air freshener, and the smell information includes a target fragrance and/or a smell concentration. The vehicle adjusts one or more of a temperature of the in-vehicle air conditioner, a humidity of the in-vehicle air humidifier, or a smell of the in-vehicle air freshener based on the setting information. In this way, the user may experience a seat pose, a temperature and humidity, a smell, and the like that correspond to the content presented by the image.

In an implementation of the second aspect, when determining, based on the first pose information, to send the image including the first display effect to the head-mounted device, the vehicle may determine a first display parameter of the image based on the first pose information, where the first display parameter represents the first display effect of the image. The vehicle performs rendering processing on the image based on the first display parameter, and sends, to the head-mounted device, the image on which the rendering processing is performed.

In the foregoing implementation, the vehicle may determine, based on the posture information of the user, the display parameter of the image that matches the current posture of the user, and render the image based on the display parameter, so that the head-mounted device can display the image that matches the current posture of the user, and better visual experience is brought to the user.

In an implementation of the second aspect, the vehicle further includes at least two speakers that are respectively disposed at different locations in the cockpit, and the media resource further includes audio corresponding to the image. After obtaining the first pose information of the user in the cockpit, the vehicle may further control, based on the first pose information, each speaker to play audio corresponding to the speaker, where the audio corresponding to each speaker is obtained based on the audio in the media resource, attribute information of the speaker, and the first pose information. Then, after obtaining the second pose information of the user in the cockpit, the vehicle controls, based on the second pose information, each speaker to play audio corresponding to the speaker, where the audio corresponding to each speaker is obtained based on the audio in the media resource, the attribute information of the speaker, and the second pose information.

In the foregoing implementation, the vehicle may control the speaker to play audio that corresponds to or matches the current posture of the user, so that the plurality of speakers in the cockpit can present, to the user, a dynamic and immersive playing effect that changes with the posture of the user. The user can experience the media resource in the cockpit in both visual and auditory ways, so that the user has better experience and a plurality of user experience requirements are met.

In an implementation of the second aspect, the audio corresponding to each speaker changes based on a change of user pose information, and a change of audio includes a change of one or more of an audio frequency, an audio amplitude, an audio delay, an audio phase, or an audio spectrum feature. In this way, the plurality of speakers in the cockpit present, to the user, more abundant sound playing effects that change with the posture of the user.

In an implementation of the second aspect, when controlling, based on the first pose information, each speaker to play audio corresponding to the speaker, the vehicle may obtain the attribute information of each speaker, where the attribute information includes one or more of a location of the speaker in the cockpit, a sound emitting direction, or a frequency response. The vehicle determines, based on the audio in the media resource, the first pose information, and the attribute information of the speaker, a first playing parameter of the audio corresponding to the speaker. Then, the vehicle performs, based on the first playing parameter, rendering processing on the audio corresponding to the speaker, and sends, to the speaker, the audio on which the rendering processing is performed, so that the speaker plays the audio on which the rendering processing is performed.

In the foregoing implementation, the vehicle may determine, based on the posture information of the user and the attribute information of the speaker, the playing parameter of the audio that matches the current posture of the user, and render the audio based on the playing parameter, so that each speaker can play a sound that matches the current posture of the user, and better auditory experience is brought to the user.

According to a third aspect, an electronic system is provided, including at least two speakers that are respectively disposed at different locations in a cockpit, where the electronic system is connected to a head-mounted device; and the electronic system further includes an information obtaining module and a resource processing module.

The information obtaining module is configured to obtain a media resource and first pose information of a user in the cockpit, where the media resource includes an image and audio corresponding to the image.

The resource processing module is configured to: send, to the head-mounted device based on the first pose information, an image including a first display effect, where the first display effect is a three-dimensional effect obtained based on the first pose information; and control, based on the first pose information, each speaker to play audio corresponding to the speaker, where the audio corresponding to each speaker is obtained based on the audio in the media resource, attribute information of the speaker, and the first pose information.

The information obtaining module is further configured to obtain second pose information of the user in the cockpit.

The resource processing module is further configured to: send, to the head-mounted device based on the second pose information, an image including a second display effect, where the second display effect is a three-dimensional effect obtained based on the second pose information; and control, based on the second pose information, each speaker to play audio corresponding to the speaker, where the audio corresponding to each speaker is obtained based on the audio in the media resource, the attribute information of the speaker, and the second pose information.

In an implementation of the third aspect, the information obtaining module is specifically configured to: obtain first information sent by the head-mounted device, where the first information is obtained by the head-mounted device through at least one sensor, and the first information includes head posture information of the user; obtain second information through at least one sensor in the cockpit, where the second information includes one or more of image information of the user, infrared information, seat location information of a seat in which the user is located, seat back angle information, seat angle information, or seat pressure information; and determine the first pose information based on the first information and the second information.

In an implementation of the third aspect, the second display effect is an effect obtained after the first display effect changes, and a change of a display effect includes a change of one or more of an image angle of view, image content, or an image size.

In an implementation of the third aspect, the audio corresponding to each speaker changes based on a change of user pose information, and a change of audio includes a change of one or more of an audio frequency, an audio amplitude, an audio delay, an audio phase, or an audio spectrum feature.

In an implementation of the third aspect, the resource processing module is further configured to: obtain image information of the image in the media resource, where the image information includes one or more of season information, weather information, temperature information, site information, scene information, or event information; and control a function component in the cockpit to provide a function that matches the image information, where the function component includes one or more of a seat, an in-vehicle air conditioner, an in-vehicle air humidifier, an in-vehicle air freshener, or a vibration unit on a seat.

In an implementation of the third aspect, the function component includes the vibration unit on the seat, there are one or more vibration units, and each vibration unit is disposed at a different location on the seat. The resource processing module is specifically configured to: determine, based on the image information, vibration information corresponding to the vibration unit, where the vibration information includes a vibration frequency and/or vibration intensity; and control, based on the vibration information, the vibration unit to vibrate.

In an implementation of the third aspect, the function component includes one or more of the in-vehicle air conditioner, the in-vehicle air humidifier, or the in-vehicle air freshener. The resource processing module is specifically configured to: determine setting information of the function component based on the image information, where the setting information includes one or more of a specified temperature value corresponding to the in-vehicle air conditioner, a specified humidity value corresponding to the in-vehicle air humidifier, or smell information corresponding to the in-vehicle air freshener, and the smell information includes a target fragrance and/or a smell concentration; and adjust one or more of a temperature of the in-vehicle air conditioner, a humidity of the in-vehicle air humidifier, or a smell of the in-vehicle air freshener based on the setting information.

In an implementation of the third aspect, the resource processing module is specifically configured to: determine a first display parameter of the image based on the first pose information, where the first display parameter represents the first display effect of the image; perform rendering processing on the image based on the first display parameter; and send, to the head-mounted device, the image on which the rendering processing is performed.

In an implementation of the third aspect, the resource processing module is specifically configured to: obtain the attribute information of each speaker, where the attribute information includes one or more of a location of the speaker in the cockpit, a sound emitting direction, or a frequency response; determine, based on the audio in the media resource, the first pose information, and the attribute information of the speaker, a first playing parameter of the audio corresponding to the speaker; perform, based on the first playing parameter, rendering processing on the audio corresponding to the speaker; and send, to the speaker, the audio on which the rendering processing is performed, so that the speaker plays the audio on which the rendering processing is performed.

According to a fourth aspect, an electronic system is provided, where the electronic system includes at least one function component, the electronic system is connected to a head-mounted device, and the electronic system further includes an information obtaining module and a resource processing module.

The information obtaining module is configured to obtain a media resource and first pose information of a user in a cockpit, where the media resource includes an image.

The resource processing module is configured to send, to the head-mounted device based on the first pose information, an image including a first display effect, where the first display effect is a three-dimensional effect obtained based on the first pose information.

The information obtaining module is further configured to obtain second pose information of the user in the cockpit.

The resource processing module is further configured to send, to the head-mounted device based on the second pose information, an image including a second display effect, where the second display effect is a three-dimensional effect obtained based on the second pose information.

The resource processing module is further configured to control, based on image information of the image, the function component in the cockpit to provide a function that matches the image information.

In an implementation of the fourth aspect, the information obtaining module is specifically configured to: obtain first information sent by the head-mounted device, where the first information is obtained by the head-mounted device through at least one sensor, and the first information includes head posture information of the user; obtain second information through at least one sensor in the cockpit, where the second information includes one or more of image information of the user, infrared information, seat location information of a seat in which the user is located, seat back angle information, seat angle information, or seat pressure information; and determine the first pose information based on the first information and the second information.

In an implementation of the fourth aspect, the second display effect is an effect obtained after the first display effect changes, and a change of a display effect includes a change of one or more of an image angle of view, image content, or an image size.

In an implementation of the fourth aspect, the function component includes a vibration unit on a seat, there are one or more vibration units, and each vibration unit is disposed at a different location on the seat. The resource processing module is specifically configured to: when controlling the function component in the cockpit to provide the function that matches the image information, determine, based on the image information, vibration information corresponding to the vibration unit, where the vibration information includes a vibration frequency and/or vibration intensity; and control, based on the vibration information, the vibration unit to vibrate.

In an implementation of the fourth aspect, the function component includes one or more of a seat, an in-vehicle air conditioner, an in-vehicle air humidifier, or an in-vehicle air freshener. The resource processing module is specifically configured to: determine setting information of the function component based on the image information, where the setting information includes one or more of a specified temperature value corresponding to the in-vehicle air conditioner, a specified humidity value corresponding to the in-vehicle air humidifier, or smell information corresponding to the in-vehicle air freshener, and the smell information includes a target fragrance and/or a smell concentration; and adjust one or more of a temperature of the in-vehicle air conditioner, a humidity of the in-vehicle air humidifier, or a smell of the in-vehicle air freshener based on the setting information.

In an implementation of the fourth aspect, the resource processing module is specifically configured to: determine a first display parameter of the image based on the first pose information, where the first display parameter represents the first display effect of the image. The electronic system performs rendering processing on the image based on the first display parameter, and sends, to the head-mounted device, the image on which the rendering processing is performed.

In an implementation of the fourth aspect, the electronic system further includes at least two speakers that are respectively disposed at different locations in the cockpit, and the media resource further includes audio corresponding to the image. After obtaining the first pose information of the user in the cockpit, the resource processing module is specifically configured to control, based on the first pose information, each speaker to play audio corresponding to the speaker, where the audio corresponding to each speaker is obtained based on the audio in the media resource, attribute information of the speaker, and the first pose information. Then, after obtaining the second pose information of the user in the cockpit, the resource processing module is specifically configured to control, based on the second pose information, each speaker to play audio corresponding to the speaker, where the audio corresponding to each speaker is obtained based on the audio in the media resource, the attribute information of the speaker, and the second pose information.

In an implementation of the fourth aspect, the audio corresponding to each speaker changes based on a change of user pose information, and a change of audio includes a change of one or more of an audio frequency, an audio amplitude, an audio delay, an audio phase, or an audio spectrum feature.

In an implementation of the fourth aspect, the resource processing module is specifically configured to: obtain the attribute information of each speaker, where the attribute information includes one or more of a location of the speaker in the cockpit, a sound emitting direction, or a frequency response; determine, based on the audio in the media resource, the first pose information, and the attribute information of the speaker, a first playing parameter of the audio corresponding to the speaker; perform, based on the first playing parameter, rendering processing on the audio corresponding to the speaker; and send, to the speaker, the audio on which the rendering processing is performed, so that the speaker plays the audio on which the rendering processing is performed.

According to a fifth aspect, a vehicle is provided, including a memory and one or more processors. The memory is coupled to the processor. The memory stores computer program code. The computer program code includes computer instructions. When the computer instructions are executed by the processor, the vehicle is enabled to perform the cockpit control method according to any one of the first aspect and the implementations of the first aspect or perform the cockpit control method according to any one of the second aspect and the implementations of the second aspect.

According to a sixth aspect, a computer-readable storage medium is provided, including computer instructions. When the computer instructions are run on a vehicle, the vehicle is enabled to perform the cockpit control method according to any one of the first aspect and the implementations of the first aspect or perform the cockpit control method according to any one of the second aspect and the implementations of the second aspect.

According to a seventh aspect, a computer program product is provided. When the computer program product runs on a vehicle, the vehicle is enabled to perform the cockpit control method according to any one of the first aspect and the implementations of the first aspect or perform the cockpit control method according to any one of the second aspect and the implementations of the second aspect.

For beneficial effects that can be achieved by the electronic system provided in the third aspect, the electronic system provided in the fourth aspect, the vehicle provided in the fifth aspect, the computer-readable storage medium provided in the sixth aspect, and the computer program product provided in the seventh aspect, refer to beneficial effects that can be achieved by any one of the first aspect and the implementations of the first aspect, or refer to beneficial effects that can be achieved by any one of the second aspect and the implementations of the second aspect. Details are not described herein again.

### BRIEF DESCRIPTION OF DRAWINGS

FIG. 1 is a diagram 1 of a structure of a vehicle according to an embodiment of this application;
FIG. 2 is a diagram 2 of a structure of a vehicle according to an embodiment of this application;
FIG. 3 is a diagram 3 of a structure of a vehicle according to an embodiment of this application;
FIG. 4 is a diagram 4 of a structure of a vehicle according to an embodiment of this application;
FIG. 5 is a schematic flowchart 1 of a cockpit control method according to an embodiment of this application;
FIG. 6 is a diagram 1 in which a vehicle controls a speaker to play audio according to an embodiment of this application;
FIG. 7 is a diagram 2 in which a vehicle controls a speaker to play audio according to an embodiment of this application;
FIG. 8 is a schematic flowchart 2 of a cockpit control method according to an embodiment of this application;
FIG. 9 is a diagram of a structure of an electronic system according to an embodiment of this application; and
FIG. 10 is a diagram 5 of a structure of a vehicle according to an embodiment of this application.

### DESCRIPTION OF EMBODIMENTS

The following describes the technical solutions in embodiments of this application with reference to the accompanying drawings in embodiments of this application. Specifically, in the descriptions of this application, unless otherwise specified, "/" indicates that associated objects are in an "or" relationship, for example, A/B may mean "A or B". "and/or" used in this application is only used to describe an association relationship between associated objects, and indicates that three relationships may exist. For example, "A and/or B" may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (pieces) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the words such as "first" and "second" limit neither of a quantity and an execution sequence, and the words such as "first" and "second" do not indicate a definite difference either. In addition, in embodiments of this application, a term such as "example" or "for example" represents giving an example, an illustration, or a description. Any embodiment or design scheme described as "example" or "for example" in embodiments of this application should not be construed as being more preferred or having more advantages than another embodiment or design scheme. Exactly, use of the terms such as "example" or "for example" is intended to present a related concept in a specific manner for ease of understanding.

In addition, a service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Currently, development of intelligent vehicles is widely concerned, and more technologies such as video and audio processing are applied to an audio system in a cockpit of a vehicle, to meet an increasingly high requirement and an increasing requirement of a user for intelligent vehicle functions.

Audio and video systems of some intelligent vehicles can be connected to VR/AR glasses. A data cable of the VR/AR glasses is connected to a USB-C port in a rear row of an intelligent vehicle, and a picture on a display disposed in the rear row is projected onto the VR/AR glasses, to provide a user with a visual experience of watching a film on a high-definition large screen, and provide a mobile cinema service based on rich video resources on an in-vehicle infotainment (or an in-vehicle terminal) of the intelligent vehicle. The intelligent vehicle can also interact with a head-mounted device like VR/AR. For example, the intelligent vehicle is responsible for collecting an image around a vehicle, and obtaining a VR/AR three-dimensional (three dimensional, 3D) virtual scenario (for example, an autonomous driving scenario) based on image modeling. Then, in response to an interactive control instruction entered by a user, a dynamic effect and the 3D virtual scenario may be synthesized to obtain a virtual scene picture, and the virtual scene picture is presented on the head-mounted device like VR/AR.

However, in the foregoing manner, only visual experience is provided for the user, and the user cannot obtain various experience from a sense of hearing, a sense of touch, a sense of smell, and the like. In other words, the user cannot obtain more immersive experience.

In addition, in some VR/AR glasses, a fixed 3D visual effect is provided for the user. In other words, content watched by the user does not dynamically change with rotation of the user head. Consequently, a user experience effect is also poor.

In addition, some intelligent vehicles are equipped with 3D/4D sound systems, and the 3D/4D sound systems can provide audio effects such as 3D/4D stereo and surround sound for users. However, due to a limitation of an actual physical environment in a cockpit, a location relationship between a user and a cockpit sound system when the user is in a vehicle usually cannot meet a requirement of the user for obtaining a standard surround sound. In addition, when a location and/or a posture of the user changes, an auditory feeling obtained by the user cannot change accordingly. Consequently, auditory experience of the user is also poor.

In the foregoing solutions, experience functions provided for the user are limited or simple, and cannot meet various user experience requirements.

Based on the foregoing content, an embodiment of this application provides a cockpit control method. A vehicle includes at least two speakers that are respectively disposed at different locations in a cockpit, and the vehicle is connected to a head-mounted device. The vehicle obtains a media resource and first pose information of a user in the cockpit, where the media resource includes an image and audio corresponding to the image. Then, the vehicle sends, to the head-mounted device based on the first pose information, an image including a first display effect, where the first display effect is a three-dimensional effect obtained based on the first pose information. The vehicle controls, based on the first pose information, each speaker to play audio corresponding to the speaker, where the audio corresponding to each speaker is obtained based on the audio in the media resource, attribute information of the speaker, and the first pose information. The vehicle continues to obtain second pose information of the user in the cockpit, and sends, to the head-mounted device based on the second pose information, an image including a second display effect, where the second display effect is a three-dimensional effect obtained based on the second pose information. Then the vehicle controls, based on the second pose information, each speaker to play audio corresponding to the speaker, where the audio corresponding to each speaker is obtained based on the audio in the media resource, the attribute information of the speaker, and the second pose information.

In the foregoing method, the first pose information and the second pose information may indicate information corresponding to different poses of the user in the cockpit respectively. The vehicle may send, to the head-mounted device, an image that corresponds to or matches a current posture of the user, and control the speaker to play audio that corresponds to or matches the current posture of the user, so that the head-mounted device can present a dynamic 3D visual effect that varies with the posture of the user. The plurality of speakers in the cockpit can present, to the user, a dynamic and immersive auditory effect that changes with the posture of the user. The user can experience the media resource in the cockpit in both visual and auditory ways, so that the user has better experience and a plurality of user experience requirements are met.

Alternatively, an embodiment of this application further provides another cockpit control method, applied to a vehicle. The vehicle includes at least one function component, and the vehicle is connected to a head-mounted device. The vehicle obtains a media resource and first pose information of a user in a cockpit, where the media resource includes an image. The vehicle sends, to the head-mounted device based on the first pose information, an image including a first display effect, where the first display effect is a three-dimensional effect obtained based on the first pose information. The vehicle continues to obtain second pose information of the user in the cockpit, and sends, to the head-mounted device based on the second pose information, an image including a second display effect, where the second display effect is a three-dimensional effect obtained based on the second pose information. In addition, the vehicle controls, based on image information of the image, the function component in the cockpit to provide a function that matches the image information.

In the foregoing method, the first pose information and the second pose information may also indicate information corresponding to different poses of the user in the cockpit respectively. The vehicle may send, to the head-mounted device, an image that corresponds to or matches a current posture of the user, and the vehicle may further control, based on image information, a function component in the cockpit to provide a function that matches the image information. In addition, the head-mounted device can present a dynamic 3D visual effect that changes with the posture of the user, and the vehicle can further provide experience in another dimension for the user. The user can experience the media resource in the cockpit from a plurality of aspects, so that the user has better experience and a plurality of user experience requirements are met.

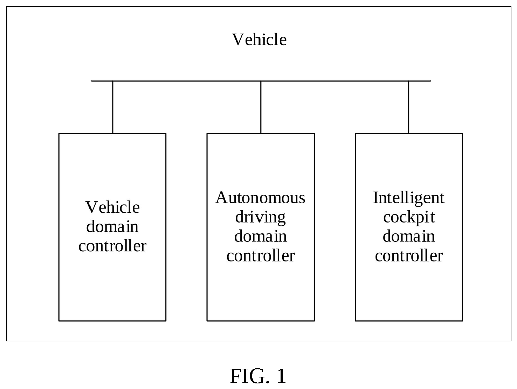

In some possible implementations, the vehicle may include at least one controller, configured to separately control different components or different areas of the vehicle. For example, with reference to FIG. 1, a vehicle may include a vehicle domain controller, an autonomous driving domain controller, and an intelligent cockpit domain controller, and the controllers may communicate with each other.

The vehicle domain controller (vehicle domain controller, VDC) is responsible for vehicle control, and this requires high real-time performance and security. The autonomous driving domain controller (adas/ad domain controller, ADC) is responsible for functions such as perception, decision-making, and control related to autonomous driving. The intelligent cockpit domain controller (cockpit domain controller, CDC) is responsible for intelligent cockpit functions such as human-machine interaction. Alternatively, the autonomous driving domain controller may be referred to as a mobile data center (mobile data center, MDC).

The cockpit control method provided in this embodiment of this application may be applied to the intelligent cockpit domain controller shown in FIG. 1.

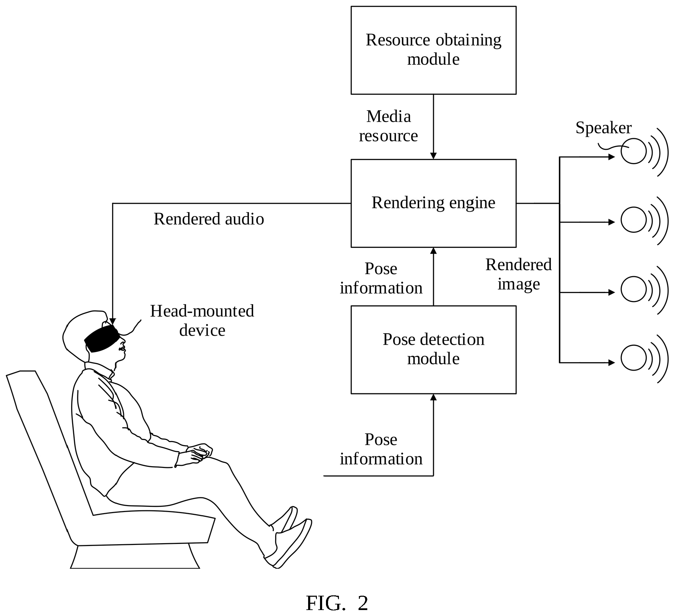

In some other possible implementations, the vehicle may further include at least one function module configured to provide a vehicle function. For example, with reference to FIG. 2, the vehicle may include a resource obtaining module, a rendering engine, and a pose detection module. In addition, the vehicle may further include a plurality of speakers, and the speakers may be respectively disposed at different locations in a vehicle cockpit. The vehicle may further be connected to a head-mounted device. The vehicle and the head-mounted device may be connected in a wired/wireless manner.

The resource obtaining module may obtain a media resource, where the media resource may include an image, audio corresponding to the image, and the like. In addition, the resource obtaining module may further send the media resource to the rendering engine.

The pose detection module may obtain pose information of a user in the cockpit, and send the pose information of the user to the rendering engine.

Because a pose (a location and a posture) of the user in the cockpit is not fixed, the pose detection module may obtain the pose information of the user in real time, so that the rendering engine may subsequently determine, based on different pose information received before and after, whether the pose of the user changes, and render the media resource based on currently received pose information, so that display and playing of the media resource match the current pose information, that is, match a current pose of the user.

The rendering engine may perform rendering processing on the image, the audio, and the like in the media resource based on the currently received pose information of the user, so that a display effect of the image, a playing effect of the audio, and the like can better match a current location and posture of the user, or the user can receive a better display effect of the image, a better playing effect of the audio, and the like at the current location and posture.

The rendering engine may send, to the head-mounted device for display, the image on which the rendering is performed, and send, to different speakers in the cockpit for playing, the audio on which the rendering is performed.

The head-mounted device may be VR/AR glasses, a VR/AR helmet, or the like.

When an image is displayed on the head-mounted device, a 3D display effect may be presented. The rendering engine receives the posture information of the user in real time, and renders the image based on the current pose information of the user. If the posture of the user changes, rendering performed by the rendering engine on the image also changes, and 3D display presented on the head-mounted device also changes. In this way, an image display effect is dynamically adjusted based on the pose of the user, and a 3D display feature of the head-mounted device is matched, so that better visual experience is brought to the user.

For example, an image angle of view, an image size, and image content that are displayed on the head-mounted device are adjusted based on a change of the pose of the user.

The speaker may be a door speaker, a Sky Surround speaker, a surround speaker, a center speaker, a headrest speaker, a subwoofer, or the like. This is not specifically limited in embodiments of this application.

When audio is played on a speaker, because there are a plurality of speakers in the cockpit, the rendering engine may determine a playing effect of each speaker based on attribute information of the speaker in the cockpit (for example, a location of the speaker in the cockpit, a sound emitting direction, a frequency response, and a device attribute of the speaker), the pose information of the user, audio, and the like, render the audio for the speaker based on the playing effect, and send, to the corresponding speakers for playing, the audio on which the rendering is performed. Audio corresponding to each speaker is different.

It may be understood that, because attributes of speakers are different, and distances, relative locations, and the like between the speakers and the user are also different, after rendering processing is performed on same audio for different speakers, audio obtained by the resource obtaining module is also different. In this way, after sounds emitted by the different speakers are propagated to the user, the user can obtain more stereoscopic and surrounding immersive auditory experience in the current pose.

If the posture of the user changes, rendering performed by the rendering engine on audio for each speaker also changes, and the audio corresponding to each speaker also changes. In this way, an audio playing effect is dynamically adjusted based on the pose of the user, so that better auditory experience is brought to the user.

For example, a change of audio includes a change of one or more of an audio frequency, an audio amplitude, an audio delay, an audio phase, or an audio spectrum feature. Alternatively, because the vehicle inputs an audio signal to the speaker, the change of the audio may alternatively be represented as a change of one or more of a signal frequency, a signal amplitude, a signal delay, a signal phase, and a signal spectrum feature of the audio.

For example, the posture of the user may include a head posture and a body posture. The head posture further includes a head rotation angle, a head rotation direction, an angle between the head and the body, and the like. The body posture includes a body rotation angle, a body rotation direction, and the like.

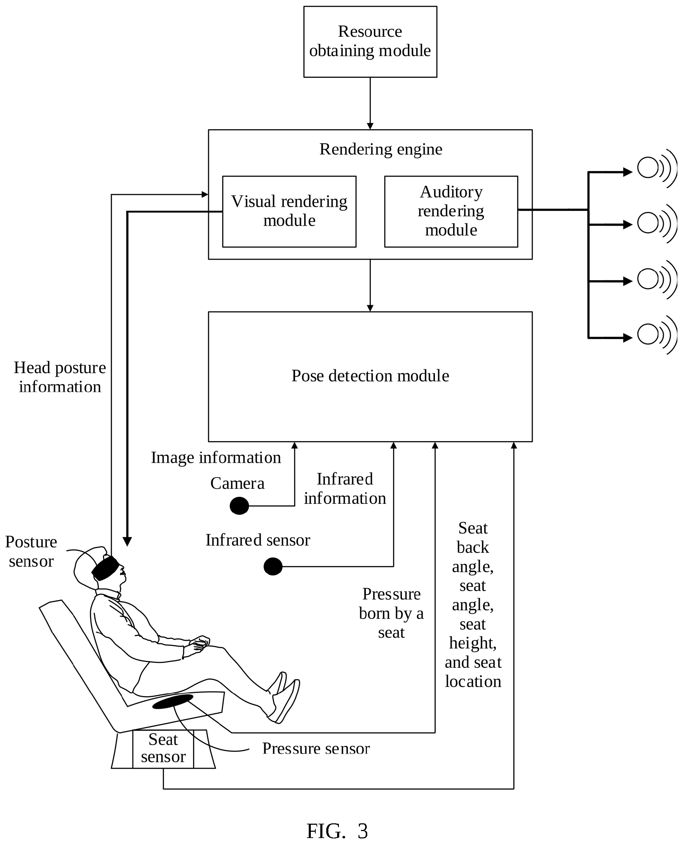

In some possible implementations, the rendering engine may further include a plurality of rendering modules, and the plurality of rendering modules render media resources of different types respectively. For example, with reference to FIG. 3, the rendering engine may include a visual rendering module and an auditory rendering module. The visual rendering module may render the image in the media resource, and the auditory rendering module may render the audio in the media resource. In addition, the visual rendering module sends, to the head-mounted device, the image on which the rendering is performed, and the head-mounted device displays the image. The auditory rendering module separately sends, to corresponding speakers, the audio on which the rendering is performed for different speakers, and the different speakers plays the audio.

In some possible implementations, the pose detection module may further include at least one sensor, and the sensor may obtain information that represents the location and the posture of the user. For example, with reference to FIG. 3, the pose detection module may include a pressure sensor, a camera, and an infrared sensor (or an infrared probe), a seat sensor.

The pressure sensor may be disposed at a lower part of each seat in the cockpit, detects seat pressure information of the seat, and sends the seat pressure information to the rendering engine. The rendering engine determines, based on the seat pressure information, whether a user is taking the seat, a weight of the user, and the like.

One or more cameras may be disposed, and the cameras are disposed at any location that is in the cockpit and at which a seat can be photographed. When a user is taking the seat, the camera may shoot an image of the user, and send image information of the user to the rendering engine, and the rendering engine determines a posture of the user based on the image information of the user.

Alternatively, the camera may shoot an image of the seat, and send image information of the seat to the rendering engine, and the rendering engine determines, based on the image information of the seat, whether a user is taking the seat, a posture of the user, and the like.

A plurality of infrared sensors (or infrared probes) may be disposed, and are disposed at a location corresponding to each seat in the cockpit. The infrared sensor may detect infrared information on a corresponding seat, and send the infrared information to the rendering engine, and the rendering engine determines, based on the infrared information, whether a user is taking the seat, and the like.

The seat sensor may be disposed on a seat, and is configured to obtain other seat information, for example, a seat back angle, a seat location, a seat height, and a seat angle (for example, an included angle or a tilt angle between a seat cushion of the seat and a bottom plane of the vehicle). The seat sensor may send the seat information to the rendering engine, and the rendering engine determines the location, the posture, and the like of the user based on the seat information.

Alternatively, the seat sensor may be a seat adjustment unit disposed on the seat, and the seat adjustment unit is configured to adjust the seat. The seat adjustment unit may send the seat information to the rendering engine, and the rendering engine determines the location, the posture, and the like of the user based on the seat information.

In some possible implementations, because the head-mounted device includes a posture sensor and the like, the pose detection module may further obtain head posture information of the user that is obtained by the posture sensor in the head-mounted device. Then, the pose detection module sends the head posture information of the user to the rendering engine, and the rendering engine determines the head posture of the user, and the like based on the head posture information of the user.

Alternatively, in some possible implementations, the head-mounted device may further obtain head posture information of the user through the posture sensor, and directly send the head posture information of the user to the rendering engine. The rendering engine determines the head posture of the user, and the like based on the head posture information of the user. A manner of obtaining the head posture information in the head-mounted device is not specifically limited in embodiments of this application.

The rendering engine may determine the pose of the user more accurately with reference to information obtained from a plurality of information input channels (for example, a plurality of sensors), so that rendering can be performed on the media resource more accurately based on the pose of the user. When the user experiences the media resource through the head-mounted device connected to the vehicle, the head-mounted device can present a better 3D display effect for the user based on the image on which the rendering is performed and that is sent by the rendering engine, and the plurality of speakers in the cockpit can present a better immersive sound to the user based on the audio on which the rendering is performed and that is sent by the rendering engine.

In some possible implementations, the image in the media resource may further include image information, for example, season information, weather information, temperature information, site information, scene information, and event information. The image information may be identified by the rendering engine from content displayed in the image, or may be carried in the media resource. This is not specifically limited in embodiments of this application.

The rendering engine may further be connected to a function component in the cockpit of the vehicle, and control, based on the image information, the function component in the cockpit to provide a function that matches the image information, so that the function provided by the function component can also meet a requirement of the user existing when the user watches the media resource, the user can experience a plurality of dimensions of somatic experience corresponding to the image, and richer experience is provided for the user.

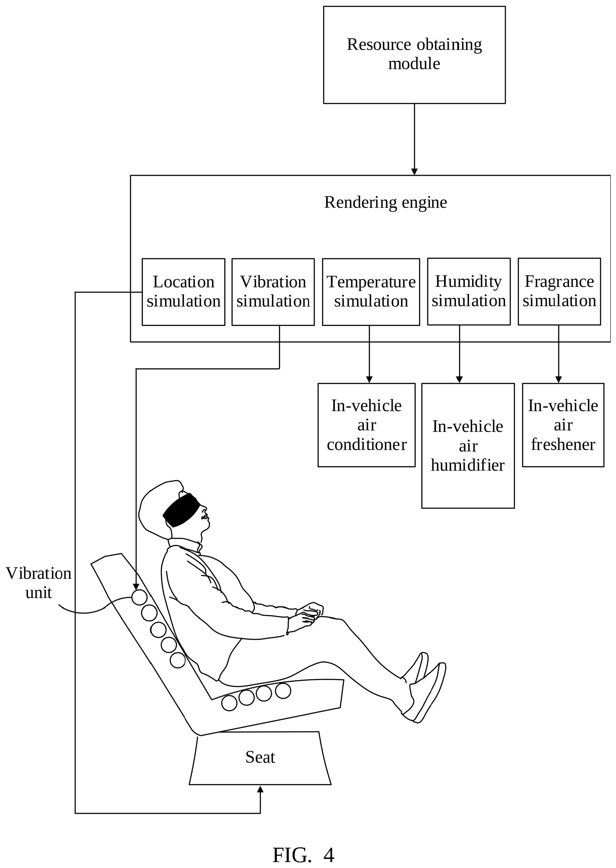

For example, with reference to FIG. 4, the function component may include a seat, an in-vehicle air conditioner, an in-vehicle air humidifier, an in-vehicle air freshener, or a vibration unit on a seat. In addition, the rendering engine may perform function simulation through different function components. For example, location simulation is performed through the seat, temperature simulation is performed through the in-vehicle air conditioner, humidity simulation is performed through the in-vehicle air humidifier, smell simulation is performed through the in-vehicle air freshener, and vibration simulation is performed through the vibration unit on the seat. Correspondingly, functions corresponding to the function components may include: adjusting a seat back angle, a seat angle, a seat location, and the like when location simulation is performed; adjusting a specified temperature value of the in-vehicle air conditioner when temperature simulation is performed; adjusting a specified humidity value of the in-vehicle air humidifier when humidity simulation is performed; adjusting fragrance, a smell concentration, and the like of the in-vehicle air freshener when smell simulation is performed; and adjusting a vibration frequency/vibration intensity of the vibration unit when vibration simulation is performed.

For example, if the image information includes scene information such as a game (for example, a roller coaster), the rendering engine may determine, based on the image information, target posture information that matches a user who takes the roller coaster in the game, for example, a height, a location, and an upper body angle of the user, to adjust one or more of the seat back angle, the seat angle, and the seat location based on the target posture information of the user. In this way, a more realistic scene effect is provided for the user in somatic sense.

In addition, according to the foregoing embodiment, because the seat adjustment unit may be disposed on the seat, the rendering engine may further adjust the seat by controlling the seat adjustment unit.

It may be understood that, in some possible implementations, to ensure user experience when the user watches a game picture, the seat adjustment unit may be further set as a low-delay/quick adjustment unit, so that the rendering engine adjusts the seat more quickly and matches a change of a scene picture.

For another example, if the image information includes season information (such as cold winter, hot summer, spring, and late autumn), weather information (such as sunny, cloudy, and foggy), temperature information (such as hot and cold), and site information (such as desert, rainforest, outdoor, and garden), the rendering engine may determine, based on the image information, the specified temperature value of the in-vehicle air conditioner, the specified humidity value of the in-vehicle air humidifier, the smell information (such as a target fragrance type and/or smell concentration) corresponding to the in-vehicle air freshener, and the like that match the current image information, so that the temperature of the in-vehicle air conditioner, the humidity of the in-vehicle air humidifier, and the smell of the in-vehicle air freshener are adjusted based on the foregoing setting information. In this way, a more realistic scene effect is provided for the user in somatic sense, and the user can experience a seat pose, a temperature and humidity, a smell, and the like that correspond to content presented by the image.

For another example, if the image information includes scene information such as an explosion, an earthquake, and a horror, the rendering engine may determine, based on the image information, vibration information of the vibration unit, for example, a vibration frequency and vibration intensity that should be applied to the user, and then control, based on the vibration information, the vibration unit to vibrate and/or adjust the vibration frequency and vibration intensity of the vibration unit, so as to provide a realistic vibration sense corresponding to the scene of the image for the user, and improve user experience.

Further, a plurality of vibration units may be further disposed on the seat, and the vibration units may be separately disposed at locations such as a seat back, a seat cushion, and a handrail. The rendering engine may determine, based on the image information, vibration information of vibration units corresponding to different locations of the user on the seat, so as to control different vibration units to vibrate at different vibration frequencies and/or vibration intensity respectively. In this way, a more realistic vibration sense can also be provided for the user.

It may be understood that the foregoing adjustment of each function component in the cockpit and a type of image information based on which the adjustment is performed are merely examples. In some other possible implementations, one or more of a plurality of pieces of image information may be used to respectively adjust one or more of the plurality of function components. This is not specifically limited in embodiments of this application.

In some possible implementations, the media resource may alternatively include a 2D media resource, a 3D media resource, a panoramic media resource (which may also be referred to as a 360° panoramic media resource), a virtual reality VR media resource, an augmented reality AR media resource, or the like. Regardless of a type of a media resource, the rendering engine may render the media resource into a resource that can be displayed by the head-mounted device and that has a 3D display effect. In this way, better viewing experience is provided for a user wearing the head-mounted device.

In addition, the media resource may be stored in local storage space of the vehicle, or may be obtained by the resource obtaining module from a server. Alternatively, when the vehicle is connected to some terminal devices (such as a mobile phone and a tablet computer), the media resource may be obtained from the terminal devices. This is not specifically limited in embodiments of this application.

Any two or all of the foregoing plurality of implementations such as visual experience, auditory experience, and somatic experience provided for the user may be implemented in combination, for example, implementing visual experience + auditory experience, implementing visual experience + somatic experience, and implementing visual experience + auditory experience + somatic experience. In this way, the rendering engine may adjust, with reference to the pose information of the user, the display effect of the image in the head-mounted device, and adjust the audio in the speaker in the cockpit or adjust the function provided by the function component in the cockpit, so that the user can experience the media resource more vividly from a plurality of angles or dimensions, and immersive experience is provided for the user.

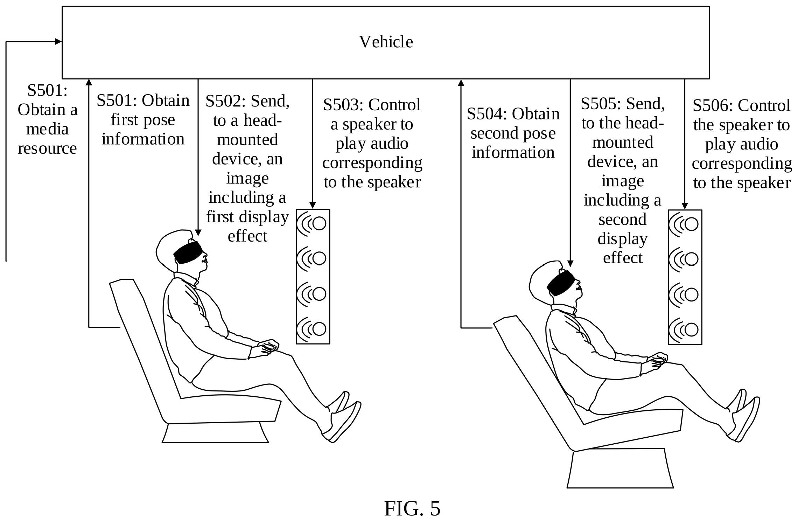

The foregoing cockpit control method may provide a user with visual experience, auditory experience, and the like of a media resource. For example, with reference to FIG. 5, the method may include step S501 to step S506.

S501: A vehicle obtains a media resource and first pose information of a user in a cockpit.

The media resource includes an image and audio corresponding to the image. In addition, the media resource may be any one of a 2D media resource, a 3D media resource, a panoramic media resource, a VR media resource, or an AR media resource. Further, the image may also be any one of a 2D image, a 3D image, a panoramic image, a VR image, or an AR image.

In addition, the vehicle may obtain the first pose information of the user in the cockpit based on at least one sensor disposed in the cockpit and/or a sensor (for example, a posture sensor) in a head-mounted device.

Because the user is not always stationary in the cockpit, pose information of the user in the cockpit also changes. The first pose information may indicate a location and a posture of the user at a moment. The vehicle may obtain, in real time, the pose information corresponding to the location and the posture of the user in the cockpit.

In some embodiments, the sensor in the head-mounted device may obtain first information, where the first information may include head posture information of the user. The at least one sensor in the cockpit may obtain second information, where the second information may include one or more of image information of the user, infrared information, seat location information of a seat in which the user is located, seat back angle information, seat angle information, or seat pressure information.

The vehicle may determine the first pose information of the user in the cockpit based on the first information and the second information. In this way, because there are a plurality of information sources or channels (for example, the at least one sensor or the head-mounted device), and there are a plurality of types of information (for example, the head posture information of the user, the image information of the user, the seat angle information, the seat location information, the seat back angle information, and the seat pressure information), the vehicle may more accurately determine the first pose information of the user with reference to the plurality of types of information. In this way, an image with a better display effect and a sound with a better immersion sense can be provided for the user based on the first pose information.

S502: The vehicle sends, to the head-mounted device based on the first pose information, an image including a first display effect.

Because the image in the media resource needs to be displayed in the head-mounted device, the first display effect of the image is a 3D effect obtained based on the first pose information. In addition, the first display effect matches a current location and a current posture of the user.

In some embodiments, the vehicle may further determine a first display parameter of the image based on the first pose information. The first display parameter represents the first display effect of the image, in other words, the first display parameter corresponds to the first display effect. In addition, the first display parameter may include a color, a pixel, a refresh rate, brightness, an angle of view, and the like that are of the image that matches the current pose of the user when the image is displayed. Then, the vehicle performs rendering processing on the image based on the first display parameter, and sends, to the head-mounted device, the image on which the rendering processing is performed, so that the head-mounted device displays the image on which the rendering processing is performed, and presents the first display effect.

In this way, content displayed by the head-mounted device can match the current posture of the user, so that better viewing experience is brought to the user.

S503: The vehicle controls, based on the first pose information, each speaker to play audio corresponding to the speaker.

The audio corresponding to each speaker is different, and the audio corresponding to each speaker is obtained based on the audio in the media resource, attribute information of the speaker, and the first pose information.

The attribute information of the speaker may include one or more of a device attribute of the speaker, a location of the speaker in the cockpit, a sound emitting direction, or a frequency response.

The vehicle may use the user as a sound field center in the cockpit, and determine how each speaker in the cockpit should make a sound, so that audio played by all speakers can form a stereoscopic and surrounding immersive playing effect at the location of the user. For example, the user can receive, at the current location, sounds made by different speakers having a same playing effect. The current location of the user may be determined based on the first pose information; and how each speaker makes a sound may be learned based on the audio in the media resource, the attribute information of the speaker, and the first pose information.

It may be understood that how each speaker makes a sound is related to the attribute information of the speaker, and is also related to a distance between the speaker and the user, the posture of the user, and the like.

Further, in some embodiments, for each speaker, the vehicle may obtain the attribute information of the speaker, and determine, based on the audio in the media resource, the first pose information, and the attribute information of the speaker, a first playing parameter of the audio corresponding to the speaker. In addition, the first playing parameter may include an amplitude, a frequency, a delay, a phase, a spectrum feature, and the like of the audio that match the current pose of the user. Then, the vehicle performs rendering processing on the audio based on the first playing parameter, and sends, to the corresponding speaker, the audio on which the rendering processing is performed, so that the speaker plays the audio on which the rendering processing is performed.

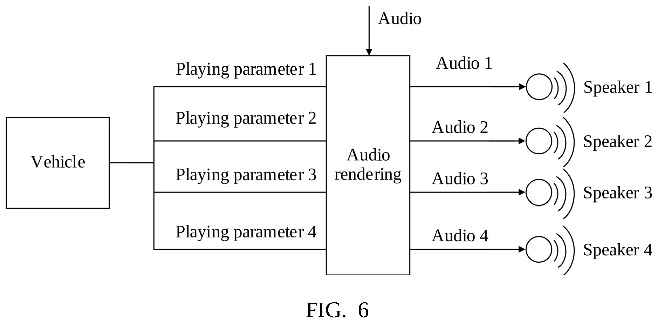

For example, with reference to FIG. 6, the cockpit includes a speaker 1, a speaker 2, a speaker 3, and a speaker 4, and the speakers are disposed at different locations in the cockpit, like a door, a center console, and a headrest. After the user sits in the cockpit, because attribute information of the speakers may be different from each other, and distances between the speakers and the user may also be different from each other, the vehicle may determine a first playing parameter corresponding to each speaker. For example, the speaker 1 corresponds to a playing parameter 1, the speaker 2 corresponds to a playing parameter 2, the speaker 3 corresponds to a playing parameter 3, and the speaker 4 corresponds to a playing parameter 4. In addition, the playing parameters are different from each other. The vehicle separately performs audio rendering based on different playing parameters to obtain audio 1, audio 2, audio 3, and audio 4 on which the rendering is performed, then sends the audio 1 to the speaker 1 for playing, sends the audio 2 to the speaker 2 for playing, sends the audio 3 to the speaker 3 for playing, and sends the audio 4 to the speaker 4 for playing. After each speaker makes a sound, the user experiences a stereoscopic and surrounding immersive auditory effect at the current location and at the current posture.

In some embodiments, the vehicle may obtain a corresponding media resource in response to a media resource selection operation of the user.

For example, after the vehicle is connected to the head-mounted device, an in-vehicle terminal in the cockpit may display a resource page for the user to select a media resource. The resource page may include a plurality of media resources, such as a video resource and a game resource. When the user selects a media resource on the resource page, the vehicle obtains the corresponding media resource in response to the operation of the user; performs processing such as rendering on an image and a sound in the media resource; and after the processing, sends, to the head-mounted device for display, the image on which the rendering is performed, and separately sends, to the speakers for playing, the audio on which the rendering is performed.

For another example, after the vehicle is connected to the head-mounted device, the head-mounted device may display a resource page for the user to select a media resource. The resource page may further include a plurality of media resources, such as a video resource and a game resource. After wearing the head-mounted device, the user may select a media resource on the resource page through a head action or the like. The head-mounted device sends a resource request to the vehicle in response to the operation of the user. The vehicle obtains a corresponding media resource based on the resource request; performs processing such as rendering on an image and a sound in the media resource; and after the processing, sends, to the head-mounted device for display, the image on which the rendering is performed, and separately sends, to the speakers for playing, the audio on which the rendering is performed.

S504: The vehicle obtains second pose information of the user in the cockpit.

The second pose information may indicate a location and a posture of the user at another moment after the first pose information is obtained. The first pose information and the second pose information may indicate information corresponding to the user in different poses in the cockpit respectively.

For a manner of obtaining the second pose information and related content, refer to related content in S501.

S505: The vehicle determines to send, to the head-mounted device based on the second pose information, an image including a second display effect.

The second display effect is a 3D effect obtained based on the second pose information.

For a manner of determining the second display effect and determining the image including the second display effect, refer to related content in S502.

S506: The vehicle controls, based on the second pose information, each speaker to play audio corresponding to the speaker.

The audio corresponding to each speaker is different, and the audio corresponding to each speaker is obtained based on the audio in the media resource, the attribute information of the speaker, and the second pose information.

For determining of the audio corresponding to each speaker, refer to related content in S503.

It may be understood that, when the location and the posture of the user in the cockpit change, correspondingly, the vehicle outputs images with different display effects to the head-mounted device, so that the display effect of the image presented by the head-mounted device to the user changes with the pose of the user. A change of a display effect includes a change of one or more of an image angle of view, image content, or an image size. In this way, image display of the head-mounted device brings better visual experience to the user.

In addition, as the location and the posture of the user change, audio presented by each speaker to the user also changes with the pose of the user. A change of audio includes a change of one or more of an audio frequency, an audio amplitude, an audio delay, an audio phase, or an audio spectrum feature. In this way, the vehicle controls, based on a posture change of the user, the audio corresponding to the speaker to change, so that a stereoscopic and surrounding immersive sound effect that can be experienced by the user does not change regardless of the posture of the user, and better auditory experience is brought to the user.

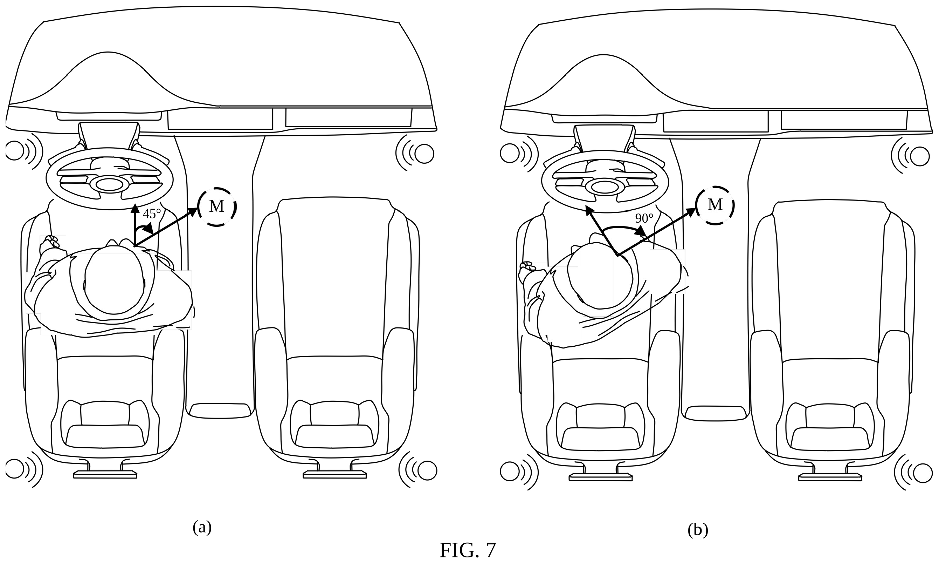

For example, with reference to (a) in FIG. 7, the user is in a first pose, for example, the user is in a driver's seat and faces directly in front of the user. The vehicle may determine, based on the first pose information corresponding to the user, the attribute information of each speaker, the audio in the media resource, and the like, audio corresponding to each speaker in the cockpit, and control the speaker to play the corresponding audio. In this way, a virtual sound image M formed by sounds played by the plurality of speakers is located at a location 45° in front of the right of the user head.

Then, the user changes the pose, and is in a second pose. For example, the user remains in the driver's seat, and the face of the user rotates to the left of the user by 45°, as shown in (b) in FIG. 7. In this case, if the user needs to hear an absolutely accurate virtual sound image M, the virtual sound image M should be located in a direction of 90° (45°+45°) on the right side of the user head. However, because the location of the user is asymmetrically arranged with the speaker in the vehicle, the virtual sound image M is not necessarily located in the direction of 90°. Therefore, the vehicle may adjust audio (such as an audio amplitude, an audio delay, and an audio spectrum) corresponding to each speaker based on the second pose information currently corresponding to the user, the attribute information of each speaker, and the audio in the media resource. In this way, after each speaker plays a sound, the virtual sound image M is at a correct location, that is, a location in the direction of 90° on the right side of the user head.

It may be understood that, in addition to the foregoing changes of the face rotation direction and angle, the user may also have a change of a ride location, a movement of a body location, and the like. For these posture changes, the vehicle may dynamically track and adaptively adjust the audio played by the speaker, so that when the user perceives the virtual sound image, the user can get rid of a constraint of the speaker attribute in the vehicle, and obtain an immersive auditory experience.

It can be learned from the foregoing content that, in the cockpit control method provided in embodiments of this application, the first pose information and the second pose information may indicate information corresponding to different poses of the user in the cockpit respectively. The vehicle may send, to the head-mounted device, an image that corresponds to or matches a current posture of the user, and control the speaker to play audio that corresponds to or matches the current posture of the user, so that the head-mounted device can present a dynamic 3D display effect that varies with the posture of the user. The plurality of speakers in the cockpit can present, to the user, a dynamic and immersive playing effect that changes with the posture of the user. The user can experience the media resource in the cockpit in both visual and auditory ways, so that the user has better experience and a plurality of user experience requirements are met.

In addition, in the cockpit control method shown in FIG. 5, the vehicle may further control, based on image information of the image, the function component in the cockpit to provide a function that matches the image information. For details, refer to content in the foregoing embodiment. In this way, the user can experience the media resource more vividly from a plurality of angles or dimensions, and immersive experience is provided for the user.

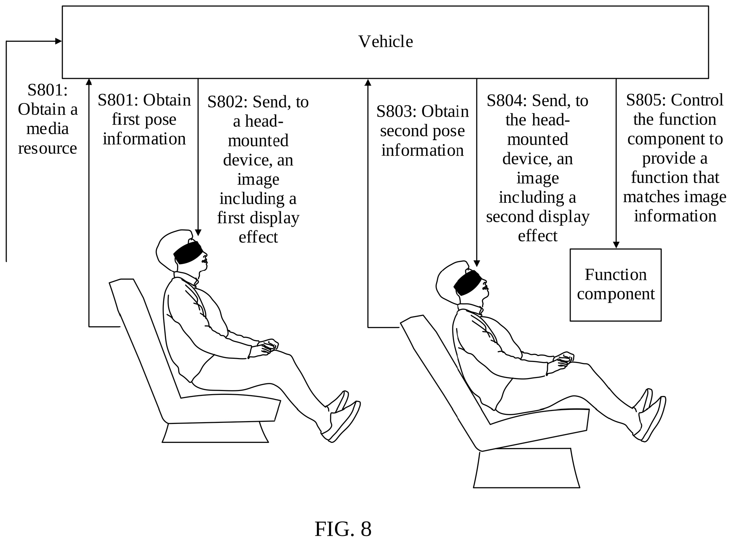

The foregoing cockpit control method may provide a user with visual experience, experience, and the like of a media resource. For example, with reference to FIG. 8, the method may include the following steps S801 to S805.

S801: A vehicle obtains a media resource and first pose information of a user in a cockpit.

The media resource includes an image.

In addition, for content of S801, refer to related content of S501 in the foregoing embodiment.

S802: The vehicle determines to send, to the head-mounted device based on the first pose information, an image including a first display effect.

The first display effect is a 3D effect obtained based on the first pose information.

In addition, for content of S802, refer to related content of S502 in the foregoing embodiment.

S803: The vehicle obtains second pose information of the user in the cockpit.

The second pose information may indicate a location and a posture of the user at another moment after the first pose information is obtained. The first pose information and the second pose information may indicate information corresponding to the user in different poses in the cockpit respectively.

In addition, for content of S803, refer to related content of S504.

S804: The vehicle determines to send, to the head-mounted device based on the second pose information, an image including a second display effect.

The second display effect is a 3D effect obtained based on the second pose information.

In addition, for content of S804, refer to related content of S505.

S805: The vehicle controls, based on image information of the image, a function component in the cockpit to provide a function that matches the image information.

The function component includes one or more of a seat, an in-vehicle air conditioner, an in-vehicle air humidifier, an in-vehicle air freshener, or a vibration unit on a seat.

In some embodiments, the vehicle may obtain the image information of the image in the media resource, where the image information includes one or more of season information, weather information, temperature information, site information, scene information, or event information. Then, the vehicle controls a function component in the cockpit to provide a function that matches the image information.

For example, the function component includes a vibration unit on a seat, there are one or more vibration units, and each vibration unit is disposed at a different location on the seat. The vehicle determines, based on the image information, vibration information corresponding to the vibration unit, where the vibration information includes a vibration frequency and/or vibration intensity. Then, the vehicle controls, based on the vibration information, the vibration unit to vibrate. In this way, the user can experience vibration corresponding to content presented by the image.

For another example, the function component includes one or more of the in-vehicle air conditioner, the in-vehicle air humidifier, or the in-vehicle air freshener. The vehicle may determine setting information of the function component based on the image information, where the setting information includes one or more of a specified temperature value corresponding to the in-vehicle air conditioner, a specified humidity value corresponding to the in-vehicle air humidifier, or smell information corresponding to the in-vehicle air freshener, and the smell information includes a target fragrance and/or a smell concentration. Then, the vehicle adjusts one or more of a temperature of the in-vehicle air conditioner, a humidity of the in-vehicle air humidifier, or a smell of the in-vehicle air freshener based on the setting information. In this way, the user may experience a seat pose, a temperature and humidity, a smell, and the like that correspond to the content presented by the image.

It can be learned from the foregoing content that the first pose information and the second pose information may indicate information corresponding to different poses of the user in the cockpit respectively. The vehicle may send, to the head-mounted device, an image that corresponds to or matches a current posture of the user, and the vehicle may further control, based on image information, a function component in the cockpit to provide a function that matches the image information. In addition, the head-mounted device can present a dynamic 3D display effect that changes with the posture of the user, and the vehicle can further provide experience in another dimension for the user. The user can experience the media resource in the cockpit from a plurality of aspects, so that the user has better experience and a plurality of user experience requirements are met.

In addition, in the cockpit control method shown in FIG. 8, the vehicle may further control, based on audio corresponding to the image in the media resource, each speaker to play audio corresponding to the speaker. In addition, as a user posture changes, the audio corresponding to each speaker also changes. For details, refer to content in the foregoing embodiment. In this way, the user can experience the media resource more vividly from a plurality of angles or dimensions, and immersive experience is provided for the user.

It may be understood that processing of the foregoing related user information (including the image information of the user, the location of the user, the posture of the user, and the like) such as collection, storage, use, processing, transmission, provision, and disclosure comply with relevant laws and regulations, and do not violate public order and good customs. For example, in embodiments of this application, user information processing is performed with user authorization.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence of steps of each procedure is merely an example, and does not constitute a limitation on an execution sequence of the steps. The steps may be alternatively performed in another execution sequence. It is not intended to indicate that the execution sequence is the only sequence in which these operations can be performed. A person of ordinary skill in the art may learn a plurality of manners of re-ranking the operations described in embodiments of this application. In addition, it should be noted that process details related to an embodiment in this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the vehicle includes a corresponding hardware and/or software module for performing each function. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the vehicle may be divided into function modules based on the foregoing method examples. For example, each function module may be obtained through division based on each corresponding function, or two or more functions may be integrated into one processing module. The integrated module may be implemented in a form of hardware. It should be noted that, in this embodiment, division into the modules is an example, is merely logical function division, and may be other division during actual implementation.

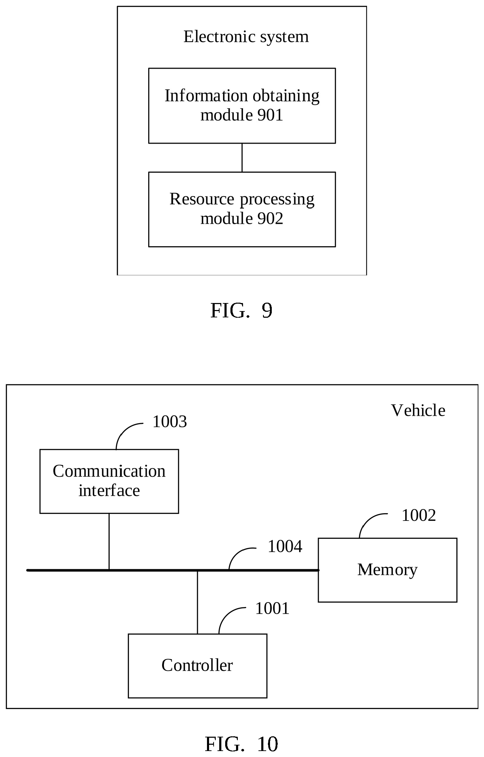

An embodiment of this application provides an electronic system. The electronic system may include at least two speakers that are respectively disposed at different locations in a cockpit, and the electronic system is connected to a head-mounted device. As shown in FIG. 9, the electronic system further includes an information obtaining module 901 and a resource processing module 902.

The information obtaining module 901 is configured to obtain a media resource and first pose information of a user in the cockpit. For example, a related step in S501 is performed.

The resource processing module 902 is configured to send, to the head-mounted device based on the first pose information, an image including a first display effect, and control, based on the first pose information, each speaker to play audio corresponding to the speaker. For example, related steps of S502 and S503 are performed.

The information obtaining module 901 is further configured to obtain second pose information of the user in the cockpit. For example, a related step in S504 is performed.

The resource processing module 902 is configured to send, to the head-mounted device based on the second pose information, an image including a second display effect, and control, based on the second pose information, each speaker to play audio corresponding to the speaker. For example, related steps of S505 and S506 are performed.

Optionally, the information obtaining module 901 may include the pose detection module, the resource obtaining module, and the like in FIG. 2. In addition, the resource processing module 902 may include the rendering engine in FIG. 2.

An embodiment of this application provides another electronic system, including at least one function component. The electronic system is connected to a head-mounted device. The electronic system may also include an information obtaining module and a resource processing module.

The information obtaining module is configured to obtain a media resource and first pose information of a user in a cockpit. For example, a related step in S801 is performed.

The resource processing module is configured to determine to send, to the head-mounted device based on the first pose information, an image including a first display effect. For example, a related step in S802 is performed.

The information obtaining module is further configured to obtain second pose information of the user in the cockpit. For example, a related step in S803 is performed.

The resource processing module is further configured to determine to send, to the head-mounted device based on the second pose information, an image including a second display effect. For example, a related step in S804 is performed.

The resource processing module is further configured to control, based on image information of the image, a function component in the cockpit to provide a function that matches the image information. For example, a related step in S805 is performed.

An embodiment of this application further provides a vehicle. As shown in FIG. 10, the vehicle may include one or more processors 1001, a memory 1002, and a communication interface 1003.

The memory 1002 and the communication interface 1003 are coupled to the processor 1001. For example, the memory 1002 and the communication interface 1003 may be coupled to the processor 1001 through a bus 1004.

The communication interface 1003 is configured to transmit data to another device. The memory 1002 stores computer program code. The computer program code includes computer instructions. When the computer instructions are executed by the processor 1001, the vehicle is enabled to perform the cockpit control method in embodiments of this application.

The processor 1001 may be a processor or a controller, like a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. The processor may implement or execute various example logical blocks, modules, and circuits described with reference to the present disclosure. Alternatively, the processor may be a combination of processors implementing a computing function, for example, a combination of one or more microprocessors, or a combination of a DSP and a microprocessor.

The bus 1004 may be a peripheral component interconnect (Peripheral Component Interconnect, PCI) bus, an extended industry standard architecture (Extended Industry Standard Architecture, EISA) bus, or the like. The bus 1004 may be categorized as an address bus, a data bus, a control bus, or the like. For ease of representation, only one thick line is for representing the bus in FIG. 10, but this does not mean that there is only one bus or only one type of bus.

An embodiment of this application further provides a computer-readable storage medium. The computer-readable storage medium includes computer instructions. When the computer instructions are run on a vehicle, the vehicle is enabled to perform related method steps in the foregoing method embodiments.

An embodiment of this application further provides a computer program product. When the computer program product runs on a computer, the computer is enabled to perform related method steps in the foregoing method embodiments.

The electronic system, the vehicle, the computer storage medium, or the computer program product provided in embodiments of this application each are configured to perform the corresponding methods provided above. Therefore, for beneficial effects that can be achieved by the electronic device, the vehicle, the computer storage medium, or the computer program product, refer to the beneficial effects in the corresponding methods provided above. Details are not described herein again.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions in embodiments of this application essentially, or the contributing part, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cockpit control method, applied to a vehicle, wherein the vehicle comprises at least two speakers that are respectively disposed at different locations in a cockpit, the vehicle is connected to a head-mounted device, and the method comprises:
obtaining a media resource and first pose information of a user in the cockpit, wherein the media resource comprises an image and audio corresponding to the image;
sending, to the head-mounted device based on the first pose information, an image comprising a first display effect, wherein the first display effect is a three-dimensional effect obtained based on the first pose information;
controlling, based on the first pose information, each speaker to play audio corresponding to the speaker, wherein the audio corresponding to each speaker is obtained based on the audio in the media resource, attribute information of the speaker, and the first pose information;
obtaining second pose information of the user in the cockpit;
sending, to the head-mounted device based on the second pose information, an image comprising a second display effect, wherein the second display effect is a three-dimensional effect obtained based on the second pose information; and
controlling, based on the second pose information, each speaker to play audio corresponding to the speaker, wherein the audio corresponding to each speaker is obtained based on the audio in the media resource, the attribute information of the speaker, and the second pose information.

2. The method according to claim 1, wherein the obtaining first pose information of a user in the cockpit comprises:
obtaining first information sent by the head-mounted device, wherein the first information is obtained by the head-mounted device through at least one sensor, and the first information comprises head posture information of the user;
obtaining second information through at least one sensor in the cockpit, wherein the second information comprises one or more of image information of the user, infrared information, seat location information of a seat in which the user is located, seat back angle information, seat angle information, or seat pressure information; and
determining the first pose information based on the first information and the second information.

3. The method according to claim 1 or 2, wherein the second display effect is an effect obtained after the first display effect changes, and a change of a display effect comprises a change of one or more of an image angle of view, image content, or an image size.

4. The method according to any one of claims 1 to 3, wherein the audio corresponding to each speaker changes based on a change of user pose information, and a change of audio comprises a change of one or more of an audio frequency, an audio amplitude, an audio delay, an audio phase, or an audio spectrum feature.

5. The method according to any one of claims 1 to 4, wherein the method further comprises:
obtaining image information of the image in the media resource, wherein the image information comprises one or more of season information, weather information, temperature information, site information, scene information, or event information; and
controlling a function component in the cockpit to provide a function that matches the image information, wherein the function component comprises one or more of a seat, an in-vehicle air conditioner, an in-vehicle air humidifier, an in-vehicle air freshener, or a vibration unit on a seat.

6. The method according to claim 5, wherein the function component comprises the vibration unit on the seat, there are one or more vibration units, and each vibration unit is disposed at a different location on the seat; and
the controlling a function component in the cockpit to provide a function that matches the image information comprises:
determining, based on the image information, vibration information corresponding to the vibration unit, wherein the vibration information comprises a vibration frequency and/or vibration intensity; and
controlling, based on the vibration information, the vibration unit to vibrate.

7. The method according to claim 5 or 6, wherein the function component comprises one or more of the in-vehicle air conditioner, the in-vehicle air humidifier, or the in-vehicle air freshener; and
the controlling a function component in the cockpit to provide a function that matches the image information comprises:
determining setting information of the function component based on the image information, wherein the setting information comprises one or more of a specified temperature value corresponding to the in-vehicle air conditioner, a specified humidity value corresponding to the in-vehicle air humidifier, or smell information corresponding to the in-vehicle air freshener, and the smell information comprises a target fragrance and/or a smell concentration; and
adjusting one or more of a temperature of the in-vehicle air conditioner, a humidity of the in-vehicle air humidifier, or a smell of the in-vehicle air freshener based on the setting information.

8. The method according to any one of claims 1 to 7, wherein the sending, to the head-mounted device based on the first pose information, an image comprising a first display effect comprises:
determining a first display parameter of the image based on the first pose information, wherein the first display parameter represents the first display effect of the image;
performing rendering processing on the image based on the first display parameter; and
sending, to the head-mounted device, the image on which the rendering processing is performed.

9. The method according to any one of claims 1 to 8, wherein the controlling, based on the first pose information, each speaker to play audio corresponding to the speaker comprises:
obtaining the attribute information of each speaker, wherein the attribute information comprises one or more of a location of the speaker in the cockpit, a sound emitting direction, or a frequency response;
determining, based on the audio in the media resource, the first pose information, and the attribute information of the speaker, a first playing parameter of the audio corresponding to the speaker;
performing, based on the first playing parameter, rendering processing on the audio corresponding to the speaker; and
sending, to the speaker, the audio on which the rendering processing is performed, so that the speaker plays the audio on which the rendering processing is performed.

10. An electronic system, comprising at least two speakers that are respectively disposed at different locations in a cockpit, wherein the electronic system is connected to a head-mounted device, and the electronic system further comprises an information obtaining module and a resource processing module, wherein
the information obtaining module is configured to obtain a media resource and first pose information of a user in the cockpit, wherein the media resource comprises an image and audio corresponding to the image;
the resource processing module is configured to: send, to the head-mounted device based on the first pose information, an image comprising a first display effect, wherein the first display effect is a three-dimensional effect obtained based on the first pose information; and control, based on the first pose information, each speaker to play audio corresponding to the speaker, wherein the audio corresponding to each speaker is obtained based on the audio in the media resource, attribute information of the speaker, and the first pose information;
the information obtaining module is further configured to obtain second pose information of the user in the cockpit; and
the resource processing module is further configured to: send, to the head-mounted device based on the second pose information, an image comprising a second display effect, wherein the second display effect is a three-dimensional effect obtained based on the second pose information; and control, based on the second pose information, each speaker to play audio corresponding to the speaker, wherein the audio corresponding to each speaker is obtained based on the audio in the media resource, the attribute information of the speaker, and the second pose information.

11. The system according to claim 10, wherein the information obtaining module is specifically configured to: obtain first information sent by the head-mounted device, wherein the first information is obtained by the head-mounted device through at least one sensor, and the first information comprises head posture information of the user; obtain second information through at least one sensor in the cockpit, wherein the second information comprises one or more of image information of the user, infrared information, seat location information of a seat in which the user is located, seat back angle information, seat angle information, or seat pressure information; and determine the first pose information based on the first information and the second information.

12. The system according to claim 10 or 11, wherein the second display effect is an effect obtained after the first display effect changes, and a change of a display effect comprises a change of one or more of an image angle of view, image content, or an image size.

13. The system according to any one of claims 10 to 12, wherein the audio corresponding to each speaker changes based on a change of user pose information, and a change of audio comprises a change of one or more of an audio frequency, an audio amplitude, an audio delay, an audio phase, or an audio spectrum feature.

14. The system according to any one of claims 10 to 13, wherein the resource processing module is further configured to: obtain image information of the image in the media resource, wherein the image information comprises one or more of season information, weather information, temperature information, site information, scene information, or event information; and control a function component in the cockpit to provide a function that matches the image information, wherein the function component comprises one or more of a seat, an in-vehicle air conditioner, an in-vehicle air humidifier, an in-vehicle air freshener, or a vibration unit on a seat.

15. The system according to claim 14, wherein the function component comprises the vibration unit on the seat, there are one or more vibration units, and each vibration unit is disposed at a different location on the seat; and the resource processing module is specifically configured to: determine, based on the image information, vibration information corresponding to the vibration unit, wherein the vibration information comprises a vibration frequency and/or vibration intensity; and control, based on the vibration information, the vibration unit to vibrate.

16. The system according to claim 14 or 15, wherein the function component comprises one or more of the in-vehicle air conditioner, the in-vehicle air humidifier, or the in-vehicle air freshener; and the resource processing module is specifically configured to: determine setting information of the function component based on the image information, wherein the setting information comprises one or more of a specified temperature value corresponding to the in-vehicle air conditioner, a specified humidity value corresponding to the in-vehicle air humidifier, or smell information corresponding to the in-vehicle air freshener, and the smell information comprises a target fragrance and/or a smell concentration; and adjust one or more of a temperature of the in-vehicle air conditioner, a humidity of the in-vehicle air humidifier, or a smell of the in-vehicle air freshener based on the setting information.

17. The system according to any one of claims 10 to 16, wherein the resource processing module is specifically configured to: determine a first display parameter of the image based on the first pose information, wherein the first display parameter represents the first display effect of the image; perform rendering processing on the image based on the first display parameter; and send, to the head-mounted device, the image on which the rendering processing is performed.

18. The system according to any one of claims 10 to 17, wherein the resource processing module is specifically configured to: obtain the attribute information of each speaker, wherein the attribute information comprises one or more of a location of the speaker in the cockpit, a sound emitting direction, or a frequency response; determine, based on the audio in the media resource, the first pose information, and the attribute information of the speaker, a first playing parameter of the audio corresponding to the speaker; perform, based on the first playing parameter, rendering processing on the audio corresponding to the speaker; and send, to the speaker, the audio on which the rendering processing is performed, so that the speaker plays the audio on which the rendering processing is performed.

19. A vehicle, comprising a memory and one or more processors, wherein the memory is coupled to the processor, the memory stores computer program code, the computer program code comprises computer instructions, and when the computer instructions are executed by the processor, the vehicle is enabled to perform the cockpit control method according to any one of claims 1 to 9.

20. A computer-readable storage medium, comprising computer instructions, wherein when the computer instructions are run on a vehicle, the vehicle is enabled to perform the cockpit control method according to any one of claims 1 to 9.

21. A computer program product, wherein when the computer program product runs on a vehicle, the vehicle is enabled to perform the cockpit control method according to any one of claims 1 to 9.
